# FASCICULE DE BREVET EUROPEEN

(11) **EP 3 681 959 B1**
(45) Date de publication et mention de la délivrance du brevet: **04.05.2022**
(21) Numéro de dépôt: 18769185.2
(22) Date de dépôt: 13.09.2018
(51) Int. Cl.: C09D 5/08, C23F 11/14, C23F 11/12, C09D 7/63, C08K 5/544

(54) **INHIBITEUR DE CORROSION LIQUIDE**
FLÜSSIGER KORROSIONSHEMMER
LIQUID CORROSION INHIBITOR

(30) Priorité: 13.09.2017 FR 1700921
(43) Date de publication de la demande: 22.07.2020
(73) Titulaire: Laboratoires Labema, 42420 Lorette (FR)
(72) Inventeur: CERONI, Laurent, 01120 La Boisse (FR)
(74) Mandataire: Tripoz, Inès
(86) Numéro de dépôt international: PCT/EP2018/074831
(87) Numéro de publication internationale: WO 2019/053172

(56) Documents cités:
- WO-A1-2015/061039
- WO-A2-2010/066403
- CN-A- 103 788 876
- CN-A- 105 907 228
- Tokyo Chemical Industry UK Ltd.: "Aminoalkyl Silanes [Silane Coupling Agents/Adhesion Promoters]", , XP002779305, Extrait de l'Internet: URL:http://www.tcichemicals.com/eshop/en/g b/category_index/12832/ [extrait le 2018-03-20]

## Description

La présente invention concerne le secteur technique des revêtements en phase aqueuse, tels que les primaires, peintures de finition, peinture Direct To Metal (DTM), vernis, destinés à l'application sur un support métallique.

Outre la résine (composant organique filmogène) constituant la base du revêtement en phase aqueuse, la formulation des revêtements précités nécessite l'utilisation d'additifs possédant des propriétés anticorrosion afin d'être appliquée à un support métallique.

Deux typologies de corrosion doivent être évitées :
- Le « flash-rust » est un phénomène de corrosion instantanée que subit un support métallique lorsque le métal est en contact avec de l'eau. Cela se produit notamment lorsqu'une peinture ou revêtement à base aqueuse vient d'être appliquée sur un support métallique. Ce phénomène est plus ou moins prononcé selon entre autres critères, l'état de préparation de la surface métallique, la nature de la peinture, les conditions de température et d'humidité au moment de l'application. Le « flash-rust » provoque l'apparition de points de rouille sur le support métallique dans le court laps de temps correspondant à l'application et au séchage du revêtement ;
- La corrosion à long terme que l'on peut définir comme la dissolution du métal dans le temps, lorsque ce dernier est soumis à un environnement agressif (exemples : solutions salines, atmosphères acides).

De plus les propriétés d'adhérence des revêtements sur les supports vont amplifier les phénomènes de corrosion à plus ou moins long terme.

De nombreux inhibiteurs de corrosion instantanée existent comme par exemple le nitrite de sodium ou certains sels d'acides inorganiques et d'alcanolamine (phosphate de triéthanolamine, borate de diéthanolamine) mais ceux-ci présentent de par leurs propriétés hydrophiles des effets négatifs vis-à-vis de la corrosion à long terme. Ils contribuent notamment à l'augmentation de la sensibilité à l'eau et augmentent le risque de cloquage par effet osmotique. Ils ne peuvent donc permettre d'assurer une protection à long terme.

De nombreux inhibiteurs de corrosion à long terme sont disponibles et connus de l'art antérieur parmi lesquels les pigments anticorrosion et les inhibiteurs de corrosion liquides.

Les pigments anticorrosion, outre leur toxicité car ils sont constitués de sels de métaux lourds comme le zinc, présentent des difficultés de mise en œuvre en raison de la nécessité de les broyer pour atteindre les granulométries ad hoc et ils ont un impact sur les propriétés du film de par leur prise d'huile importante. En outre, ils ne sont pas utilisables dans les revêtements transparents comme les vernis.

D'autres comme ceux cités dans la demande WO2010/066403, sont à base d'oxyde de silice et d'alumine modifié par des sels de cations métalliques polyvalents mais présentent néanmoins les inconvénients précités.

Les inhibiteurs de corrosion liquides ne présentent pas les inconvénients des pigments anticorrosion, ils sont plus faciles à mettre en œuvre et sont mieux adaptés aux systèmes transparents.

Certains comme par exemple ceux décrits dans la demande de brevet US7,306,663 et comprenant un sel complexe entre une amine et un acide carboxylique permettraient d'obtenir à la fois un effet anti « flash-rust » et une amélioration de la résistance à la corrosion à long terme,

D'autres comme ceux décrits dans la demande de brevet WO2008/107529 comprenant des aminosilanes, des composés azolés, des acides carboxyliques et des amines grasses permettraient une amélioration de la résistance à la corrosion à long terme et une amélioration de l'adhérence du revêtement sur le support métallique.

CN 105 907 228 A divulgue une composition aqueuse de type inhibiteur de corrosion liquide, comprenant: 6% de diéthanolamine; 5,5% d'acide acétique et 1,5% d'acide citrique; 5% de lauryl amine; 1% de 3-aminopropyl triméthoxysilane

Il existe un réel besoin de mettre au point une composition d'un inhibiteur de corrosion liquide qui, lorsqu'il est utilisé à un dosage donné, fournit simultanément les trois fonctionnalités :
- protection contre le « flash-rust » ;
- amélioration de la résistance à la corrosion à long terme, et ;
- amélioration de l'adhérence du revêtement sur le support métallique.

En outre, les compositions ne doivent pas présenter les problèmes qui sont :
- la stabilité des compositions mettant en présence des composés de nature chimique différente ;
- la compatibilité des compositions obtenues avec les peintures conventionnelles en phase aqueuse. Ajoutée en post-addition, ou durant la fabrication, la composition ne doit pas perturber la rhéologie de la peinture et la rendre inapplicable.

Par ailleurs, pour que la composition soit pérenne, il faut que les matières premières soient conformes au règlement européen REACH. L'enregistrement des substances dont l'utilisation est envisagée est obligatoire.

Il faut également que les substances dont l'utilisation est envisagée soient enregistrées sur les principaux inventaires étrangers, ce qui facilitera l'exportation de la composition dans les Etats concernés.

Les brevets antérieurs n'avaient pris en compte que deux fonctionnalités : soit le "flash-rust" et l'anticorrosion en ignorant l'adhérence, ou n'avaient pris en compte que l'anticorrosion et l'adhérence, en négligeant le flash-rust.

Le challenge pour le Déposant a été de réussir à réunir ces trois fonctionnalités dans le même additif, optimisant par la même la mise en fabrication industrielle.

Les compositions selon l'invention présentent :
- une excellente compatibilité entre les différentes matières premières sélectionnées, certaines interagissant en modifiant les solubilités ;
- une bonne compatibilité des mélanges élaborés avec différentes formulations de peintures dès lors que la composition selon l'invention est adaptée à la nature chimique de la résine ;
- des propriétés « anti « flash-rust » »,
- des propriétés inhibitrices de la corrosion à long terme, et ;
- une amélioration de la tenue à la corrosion et l'adhérence, validée par l'absence de cloquage et le test d'arrachage selon la norme NF EN ISO 2409.

Une composition selon l'invention, pour préparer un inhibiteur de corrosion liquide destiné à incorporer un revêtement en phase aqueuse destiné à l'application sur un support métallique, est une composition sous la forme d'une solution aqueuse contenant des ingrédients actifs comprenant une ou plusieurs alcanolamines, un ou plusieurs acides carboxyliques et au moins un composé choisi parmi les acides inorganiques, les amines grasses et les promoteurs d'adhérence.

Dans un mode de réalisation, pour améliorer la compatibilité de la solution aqueuse avec les peintures conventionnelles, un solvant est intégré dans la composition.

L'invention concerne donc une composition se présentant sous la forme d'une solution aqueuse contenant :
- de 15 à 30% du poids total d'eau ou d'un mélange d'eau et de solvant ;
- de 5 à 30% du poids total d'une ou plusieurs alcanolamines ;
- de 5 à 30% du poids total d'un ou plusieurs acides carboxyliques ;
- de 5 à 30% du poids total d'une ou plusieurs amines grasses ;
- de 5 à 50% du poids total d'un promoteur d'adhérence choisi parmi les silanes bifonctionnels.

Les éléments obligatoires sont l'eau (ou le mélange d'eau et de solvant), les alcanolamines, les acides carboxyliques, les amines grasses et le promoteur d'adhérence.

Il est possible d'ajouter un ou plusieurs acides inorganiques, pour améliorer les propriétés « anti « flash-rust » ».

Dans un mode de réalisation, la teneur en acides inorganiques est alors de 1 à 10% du poids total.

Les intervalles de teneur en les différents constituants préférés sont :
- de 20 à 25% du poids total d'eau ou mélange d'eau et de solvant ;
- de 5 à 25% du poids total d'une ou plusieurs alcanolamines ;
- de 10 à 30% du poids total d'un ou plusieurs acides carboxyliques ;
- de 5 à 15% d'une ou plusieurs amines grasses ;
- de 15 à 25% d'un promoteur d'adhérence choisi parmi les silanes bifonctionnels ;
- de 1 à 5% d'un acide inorganique.

La plage de concentrations préférées de l'eau ou du mélange d'eau et de solvant est celle qui assure la bonne solubilité de l'ensemble des matières actives, tout en optimisant leurs concentrations respectives.

La concentration des alcanolamines découle des pourcentages retenus pour les acides carboxyliques, et éventuellement les acides inorganiques. La concentration préférée des alcanolamines dans la composition est telle que les alcanolamines se trouvent en quantité équimolaire par rapport à l'ensemble des acides.

Pour les acides carboxyliques, les amines grasses et le promoteur d'adhérence, la limite inférieure de la plage de concentrations préférées est déterminée par rapport à un critère d'efficacité que doit remplir la composition.

Pour les acides carboxyliques, le critère visé est l'efficacité « anti « flash-rust » ».

Pour les amines grasses, le critère visé est l'amélioration de la résistance à la corrosion.

Pour le promoteur d'adhérence, le critère visé est l'amélioration de l'adhérence du film sec du revêtement en phase aqueuse appliqué sur un support métallique.

Pour que les effets recherchés soient visibles, il est obligatoire que les matières actives soient présentes en quantité suffisante dans le revêtement en phase aqueuse lorsque la composition est utilisée au dosage recommandé. En-dessous de ces concentrations critiques, la fonctionnalité recherchée est soit amoindrie, soit perdue.

La composition doit être une solution aqueuse homogène, au sein de laquelle aucune matière active ne dépasse sa limite de solubilité.

Dans le cas d'un mélange d'eau et de solvant, le solvant préféré est choisi dans le groupe des éthers de glycols comme les :
- (2-methoxymethylethoxy)propanol, méthyl glycol (ou 2-méthoxyéthanol ou EGME) ;
- éthyl glycol (ou 2-éthoxyethanol, ou EGEE) ;
- butylglycol (ou 2-butoxyéthanol, ou EGBE);
- méthyl diglycol (ou DEGME) ;
- éthyl diglycol (ou DEGEE) ;
- butyl diglycol (ou DEGBE) ;
- méthoxypropanol.

Les alcanolamines sont choisies parmi la monoéthanolamine, la diéthanolamine, la triéthanolamine.

Dans un mode de réalisation, l'alcanolamine est la diéthanolamine.

Les acides carboxyliques peuvent être aromatiques ou aliphatiques, non substitués ou substitués, monoacides ou diacides.

Dans un mode de réalisation, les acides aliphatiques sont choisis dans le groupe constitué par les acides dont la chaine aliphatique linéaire ou ramifiée, saturée ou insaturée comporte plus de 6 atomes de carbone.

Dans un mode de réalisation, la chaine aliphatique ramifiée comporte de 6 à 10 carbones.

Dans un mode de réalisation, l'acide carboxylique est l'acide heptanoïque.

Dans un mode de réalisation, les acides aliphatiques sont choisis dans le groupe constitué par les diacides dont la chaine aliphatique, linéaire ou ramifiée, saturée ou insaturée comporte de 4 à 12 carbones.

Dans un mode de réalisation, la composition selon l'invention comprend un acide inorganique pour équilibrer les espèces ioniques.

Dans un mode de réalisation, l'acide inorganique est l'acide phosphorique.

La teneur en acide inorganique est comprise entre 1 et 5 % du poids total de la composition.

On entend par amine grasse une amine choisie parmi les alkyldiméthylamines, dont la chaine alkyle comporte plus de 8 atomes de carbone.

Lesdites alkyldiméthylamines doivent être solubilisables dans la composition par salification.

Dans un mode de réalisation, la chaine alkyle est une chaine en C8-C18.

Dans un mode de réalisation, l'alkyldiméthylamine est choisie dans le groupe constitué de l'octadécylamine (CAS n° 124-30-1), de la dodécylamine (CAS n° 124-22-1), d'alkylamines en C16-C18 (CAS n° 112-90-3), d'alkylamines en C12-C18 (CAS n° 61788-46-3) et de la cocodiméthylamine (CAS n° 61788-93-0).

Dans un mode de réalisation, le ratio fonctions amines/fonctions acides doit être strictement supérieur à 1 et inférieur à 2.

Dans un mode de réalisation, les silanes bifonctionnels sont choisis parmi les silanes bifonctionnels possédant un groupe réactionnel amine primaire ou secondaire, et un groupe réactionnel trialcoxysilyl.

Dans un mode de réalisation, les silanes bifonctionnels sont choisis dans le groupe constitué par les aminosilanes.

Dans un mode de réalisation, les aminosilanes sont choisis dans le groupe constitué par le 3-aminopropyltriethoxysilane (CAS n° 919-30-2), le 3-aminopropylTriethoxysilane et le bis(triethoxysilylpropyl)amine, seuls ou en mélange.

Dans un mode de réalisation, les silanes bifonctionnels sont choisis dans le groupe constitué par les époxysilanes.

Dans un mode de réalisation, les époxysilanes sont choisis dans le groupe constitué par [3-(2,3-époxypropoxy)propyl]triéthoxysilane (CAS n° 2602-34-8), 3-glycidyloxypropyl trialkoxysilane et le 2-((3-(trimethoxysilyl)propoxy)methyl)-oxirane (CAS n°68611-45-0) seul ou en mélange n solution ou hydrolysé.

Dans un mode de réalisation, les silanes bifonctionnels sont choisis dans le groupe constitué par les alkylpolysiloxanes.

Dans un mode de réalisation, les alkylpolysiloxanes sont choisis dans le groupe constitué par les alkylpolysiloxanes, modifiés amine.

Le pH de la composition selon l'invention est supérieur à 7.

Dans un mode de réalisation, le pH de la composition selon l'invention est compris entre 8 et 10.

Les avantages techniques de la solution proposée sont :
- protection contre le « flash-rust » ;
- amélioration de la résistance à la corrosion à long terme ;
- amélioration de l'adhérence du revêtement sur le support métallique.

La composition selon l'invention est incorporée par mélange dans une composition destinée à être appliquée sous forme de film sur un support métallique comme les revêtements en phase aqueuse, tels que les primaires, les peintures de finition, les peintures « Direct To Metal » (DTM), les vernis, appelée dans la suite de la description peinture.

En fonction de la composition de ladite peinture, la composition selon l'invention pourra être adaptée.

Par exemple, on incorporera une composition selon l'invention comportant des aminosilanes dans une peinture epoxy et une composition selon l'invention comportant des epoxysilanes dans une peinture acrylique.

Le dosage recommandé s'établit entre 2 et 5% du poids total de la peinture, de manière préférée entre 2 et 2.5 %.

En dessous de 2%, le promoteur d'adhérence risque d'être sous-dosé, et on risque d'atteindre la limite en termes d'amélioration de l'adhérence.

Au-delà de 5 %, on risque alors d'augmenter la sensibilité à l'eau du film sec, en laissant dans l'épaisseur du revêtement une quantité trop importante de matières hydrophiles.

La meilleure façon d'incorporer la composition dans les revêtements conventionnels en phase aqueuse (primaires, peintures de finition, peintures DTM, vernis) est de l'incorporer en fin de fabrication, prédiluée à 50% avec de l'eau, dans une phase suffisamment visqueuse, sous très fort cisaillement.

La fabrication de la composition s'effectue par introductions successives des matières premières sous agitation constante, dans l'ordre suivant :
- eau ou mélange eau/solvant ;
- alcanolamines ;
- amines grasses ;
- acides carboxyliques ;
- acides inorganiques ;
- promoteur d'adhérence.

La préparation ne nécessite ni chauffage ni refroidissement.

### Procédé de fabrication :

La première étape consiste à peser chaque matière première, après les avoir contrôlées. Les préparations ne se calculent pas en volumes, mais de façon pondérale.

La préparation se fabrique dans un réacteur, de préférence cylindrique, avec agitation par hélice. La bonne solubilisation des composés ne nécessite pas d'agitateur à cisaillement ou disperseur.

La quantité d'eau est mesurée en premier, et mise en agitation.

Sans rompre l'agitation, les différents ingrédients déjà pesés sont ajoutés selon l'ordre de la fiche de préparation. L'ordre est important, il a été défini en laboratoire et assure la bonne solubilité des ingrédients.

L'agitation est maintenue pendant un temps suffisant pour assurer la bonne solubilité des ingrédients, de 30 minutes à une heure environ.

Un échantillon est alors prélevé, et les constantes physiques sont contrôlées au laboratoire.

Si les constantes mesurées sont conformes, on laisse reposer la préparation pour évacuer les bulles d'air pouvant être présentes. Une fois clarifiée, la préparation peut être conditionnée.

Le demandeur a mis au point les compositions suivantes :

**Tableau 1 : composition sans acide inorganique**

| Ingrédients actifs | Pourcentage du poids total de la composition |
|---|---|
| Eau | 22,7 |
| Diéthanolamine | 19,7 |
| Cocodiméthylamine | 12,2 |
| Acide heptanoïque | 25,4 |
| 3-aminopropyltriéthoxysilane | 20,0 |

**Tableau 2 : composition avec mélange d'eau et de solvant**

| Ingrédients actifs | Pourcentage du poids total de la composition |
|---|---|
| Eau | 11,1 |
| 2-méthoxyméthyléthoxypropanol | 10,9 |
| Diéthanolamine | 22,4 |
| Cocodiméthylamine | 12,0 |
| Acide heptanoïque | 22,4 |
| Acide phosphorique | 1,2 |
| 3-aminoropyltriéthoxysilane | 20,0 |

**Tableau 3 : composition sans solvant et avec acide inorganique**

| Ingrédients actifs | Pourcentage du poids total de la composition |
|---|---|
| Eau | 22,0 |
| Diéthanolamine | 22,4 |
| Cocodiméthylamine | 12,0 |
| Acide heptanoïque | 22,4 |
| Acide phosphorique | 1,2 |
| 3-aminopropyltriéthoxysilane | 20,0 |

### EXEMPLE 1

La composition exemplifiée au tableau 3 a été utilisée pour tester l'amélioration de la résistance à la corrosion d'un primaire anticorrosion en phase aqueuse, à base d'une émulsion styrène-acrylique à haut extrait sec.

Les essais de validation sont des essais comparatifs, qui sont menés simultanément sur un échantillon de peinture sans la composition, et un échantillon de peinture avec la composition à un dosage donné. Les résultats qui sont présentés ont donc été obtenus dans les mêmes conditions d'essais.

Les essais sont réalisés de la façon suivante: les peintures sont appliquées à l'aide d'un bar coater (tige filetée) qui permet de déposer une épaisseur de peinture liquide homogène sur l'ensemble de la surface de l'éprouvette métallique. Pour ces essais, 200 microns de peinture ont été appliqués. Les éprouvettes sont ensuite séchées pendant une semaine : deux jours à température ambiante, puis étuvées trois jours à 50°C, et deux jours à température ambiante. L'épaisseur sèche est mesurée. Pour ces essais, les films de peinture sèche avaient une épaisseur de 100 à 110 microns.

Une incision parallèle à la plus grande dimension de l'éprouvette est pratiquée à l'aide d'un outil tranchant de type cutter.

Les éprouvettes sont ensuite soumises au test de brouillard salin neutre (NSS : Neutral Salt Spray) qui consiste à pulvériser en continu une solution salée. Tous les paramètres de fonctionnement du brouillard salin (qualité du sel, caractéristiques de la solution saline, température, volumes de solution à pulvériser) sont fixés par la norme ISO 9227.

Les éprouvettes sont retirées de la machine à des temps d'exposition donnés, et une cotation du degré de cloquage et du degré d'enrouillement leur est attribuée.

Deux normes établissent les différents niveaux de cotations:
- ISO 4628-2 pour le cloquage ;
- ISO 4628-3 pour l'enrouillement.

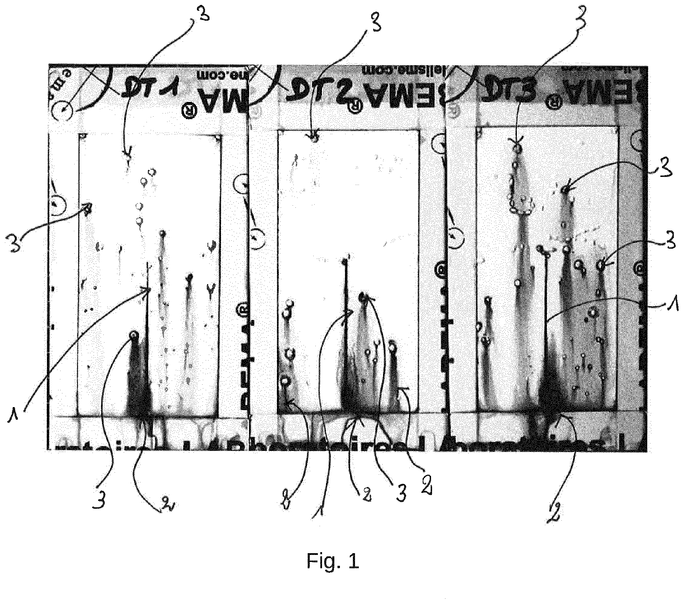

La figure 1 montre la résistance à la corrosion de la peinture ne contenant pas la composition après 513 heures d'exposition au brouillard salin. On observe que sur les 3 essais réalisés de la rouille (2) et des cloques (3) sont apparues sur l'ensemble de l'échantillon et pas uniquement au niveau de l'incision.

Les temps d'exposition des éprouvettes au brouillard salin sont par exemple pour les revêtements traditionnels en phase aqueuse et pour les peintures monocomposant à base de liants acrylique ou alkyde au minimum de 500 heures et de 1000 heures pour les peintures époxy bicomposant.

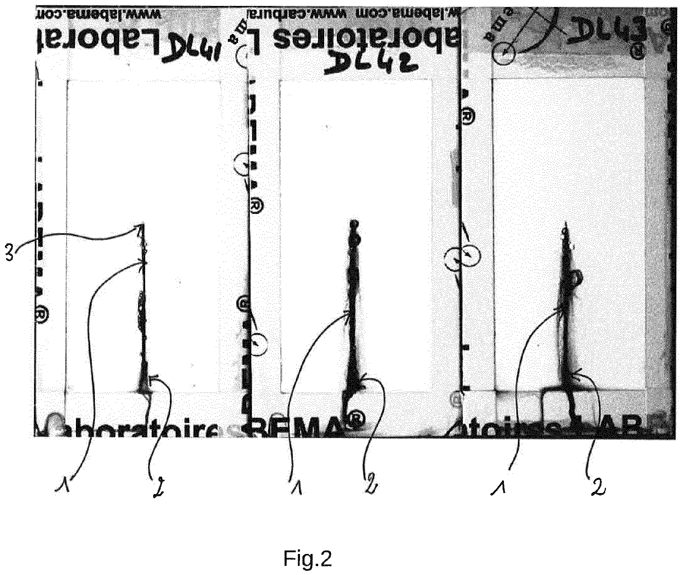

La figure 2 montre la résistance à la corrosion de la peinture contenant la composition selon la présente invention au dosage de 2,5% du poids total après 710 heures d'exposition au brouillard salin. Sur les 3 essais effectués, la rouille apparaît uniquement à l'endroit de l'incision (1) tout comme quelques cloques.

On observe très clairement les différences de corrosion entre les deux figures.

### EXEMPLE 2

La composition exemplifiée au tableau 3 a été utilisée pour tester l'amélioration de l'adhérence d'une peinture DTM formulée à partir d'une dispersion colloïdale styrène-acrylique.

Le test est réalisé à l'aide d'une bande (4) d'un adhésif sur support papier kraft dont la matière adhésive est à base de caoutchouc vendu par la société 3M sous la référence Scotch^{™} 2525.

Une bande d'adhésif (4) de longueur supérieure à l'incision est appliquée sur celle-ci. La bande d'adhésif (4) est lissée afin de chasser d'éventuelles bulles d'air, puis la bande d'adhésif (4) est arrachée en respectant une inclinaison et une vitesse d'arrachement fixées par la norme NF EN ISO 2409.

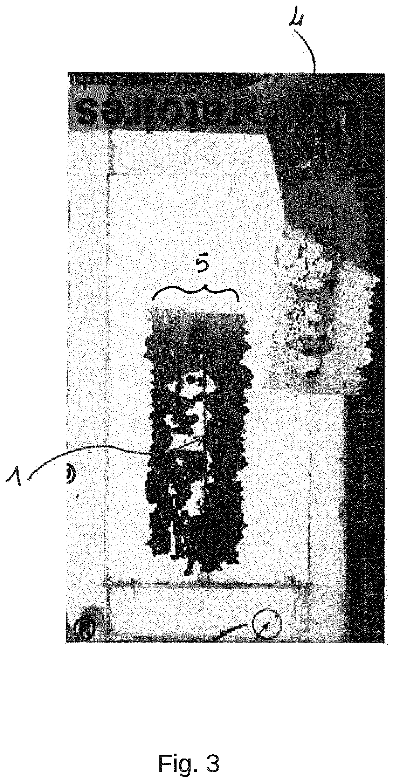

La figure 3 montre l'adhérence de la peinture ne contenant pas la composition après 513 heures d'exposition au brouillard salin. On observe que quasiment l'ensemble de la peinture est partie en retirant la bande d'adhésif laissant une bande (5) sans peinture sur le support

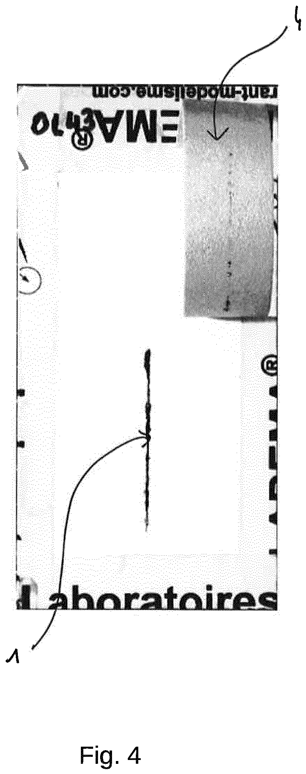

La figure 4 montre l'adhérence de la peinture contenant la composition selon la présente invention au dosage de 2,5 % du poids total après 328 heures d'exposition au brouillard salin.

On voit également très nettement que la composition selon la présente invention permet de garantir la fixation de la peinture sur le support puisque seule l'incision (1) est visible et la peinture est restée fixée sur le support.

### EXEMPLE 3

### Ajout de solvant

Des essais ont été réalisés pour vérifier l'influence de l'ajout de solvant dans la composition exemplifiée au tableau 3.

50 % de l'eau a été remplacée par du 2-méthoxyméthyléthoxypropanol.

### Essais sur peinture DTM

Des essais ont été réalisés en ajoutant 2,5 % en poids total de la composition dans une peinture DTM formulée à partir d'une dispersion colloïdale styrène-acrylique.

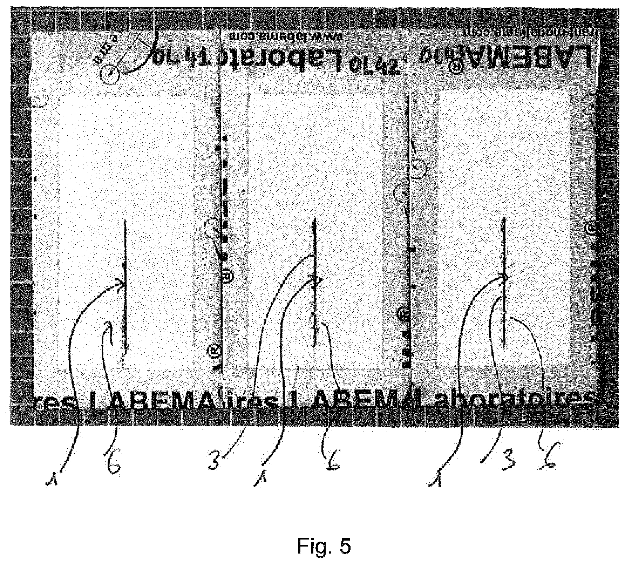

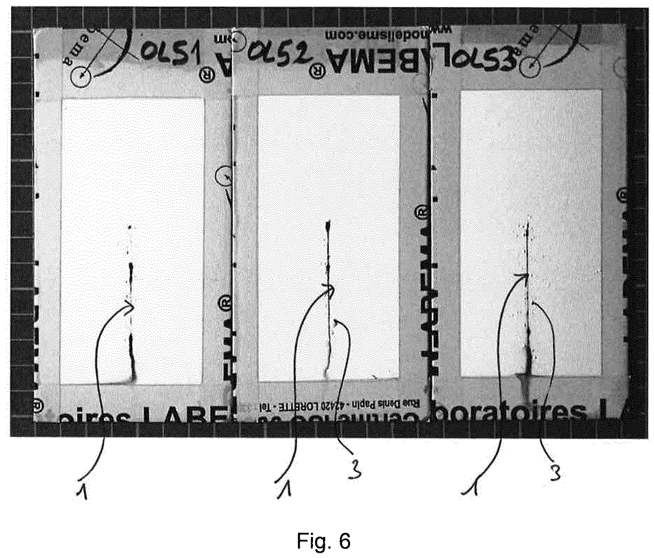

Les résultats sont donnés aux Figures 5 et 6.

La figure 5 présente les résultats obtenus avec ajout de 2,5 % de la composition sans solvant après 328 heures de brouillard salin et la figure 6 les résultats obtenus avec ajout de 2,5 % de la composition avec solvant après 307 heures de brouillard salin.

La part de solvant améliore la compatibilité de la composition dans la peinture DTM formulée à partir d'une dispersion colloïdale styrène-acrylique. Cela se traduit par un aspect plus lisse de l'application, le film sec étant exempt de grains quand la composition contient le solvant.

La résistance à la corrosion et l'adhérence de la peinture sont équivalentes.

La corrosion à proximité de l'incision (1) est équivalente avec et sans solvant.

En revanche, sur la Figure 5 on voit apparaître des cloques (3) plus nombreuses et une nuée de grains ou petites cloques (6).

### Essais sur émulsion styrène-acrylique à haut extrait sec

Des essais ont été réalisés en ajoutant 2,5 % en poids total de la composition dans un primaire anticorrosion en phase aqueuse, à base d'une émulsion styrène-acrylique à haut extrait sec.

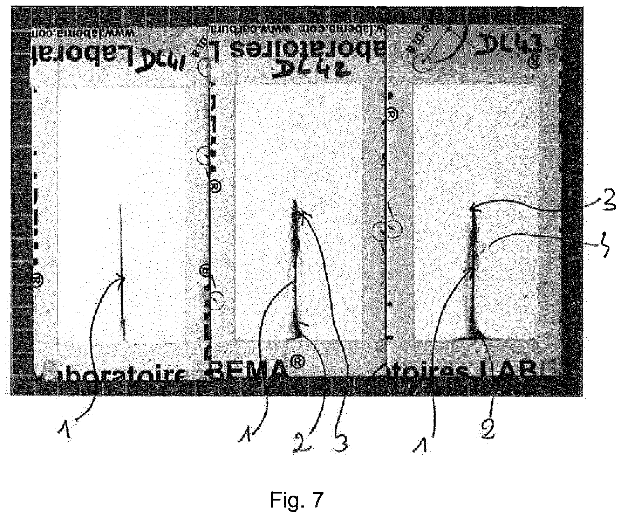

Les résultats sont donnés aux Figures 7, 8, 9 et 10.

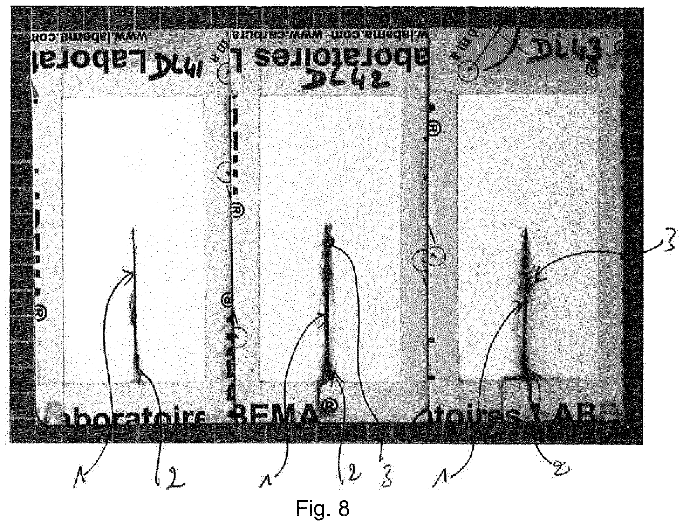

La figure 7 présente les résultats obtenus avec ajout de 2,5 % de la composition sans solvant après 328 heures de brouillard salin et la figure 8 après 499 heures de brouillard salin.

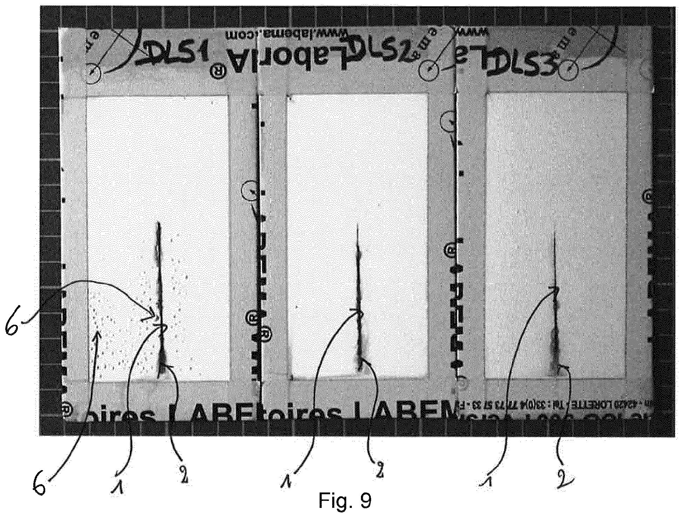

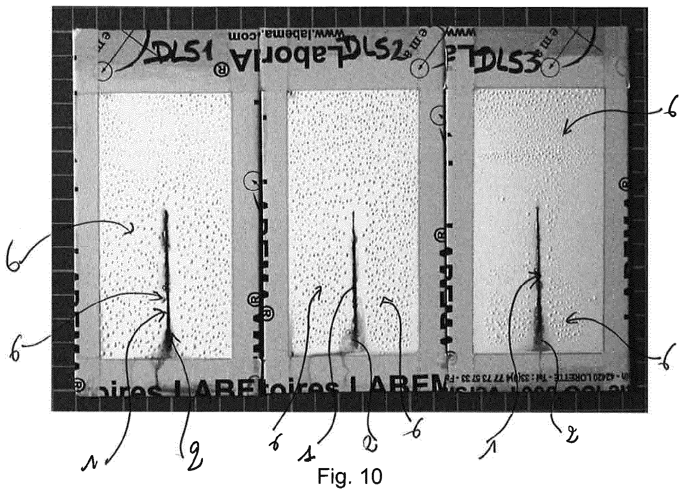

La figure 9 les résultats obtenus avec ajout de 2,5 % de la composition avec solvant après 307 heures de brouillard salin et la figure 10 après 504 heures de brouillard salin.

La part de solvant dégrade l'adhérence du film sec, comme en témoigne le cloquage plus important sur une des trois plaques après 307 heures de brouillard salin, et surtout en raison du cloquage généralisé après 504 heures de brouillard salin.

Sur les figures 7 et 8 l'oxydation n'a lieu qu'à proximité immédiate de l'incision (1).

Sur les figures 9 et 10 des cloques (3) et des nuées de petites cloques (6) apparaissent et se généralisent sur l'ensemble de l'éprouvette après 504 heures de brouillard salin.

En conclusion, l'introduction d'une part de solvant dans la composition doit être envisagée uniquement si la formulation sans solvant s'avère incompatible avec le revêtement en phase aqueuse de destination.

En effet, il semble que le solvant, lorsqu'il n'est pas indispensable, puisse détériorer l'adhérence du film de peinture, ce qui se traduit par un cloquage plus intense.

### EXEMPLE 4

### Essais comparatifs de promoteurs d'adhérence

Des essais comparatifs ont été effectués entre un silane fonctionnalisé amine primaire et un silane fonctionnalisé amine primaire et secondaire, à dosage constant (20%) dans la composition.

Les essais ont été effectués par addition de la composition exemple décrite dans le tableau 3 dans laquelle les silanes ont été remplacés par les silanes testés.

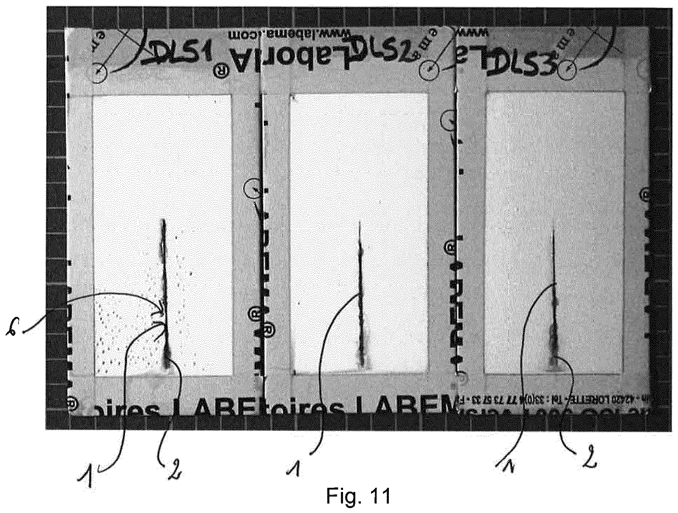

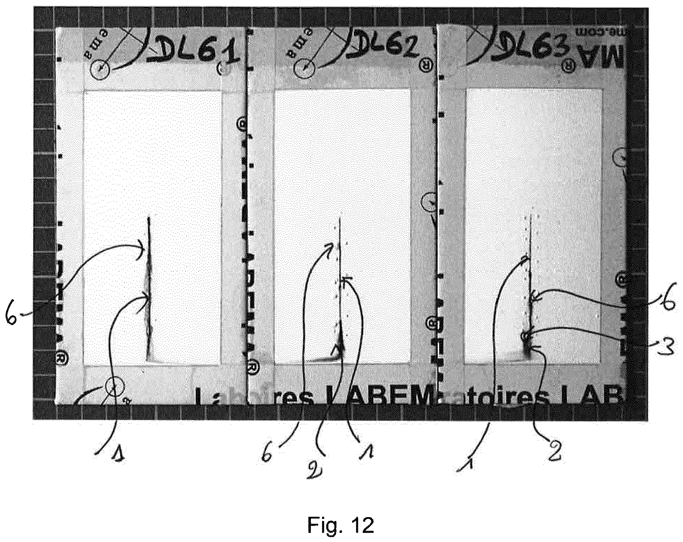

Les figures 11 et 12 sont relatives aux essais effectués avec un primaire anticorrosion en phase aqueuse, à base d'une émulsion styrène-acrylique à haut extrait sec après 300 heures de brouillard salin.

La figure 11 présente les essais avec le silane fonctionnalisé amine primaire et la figure 12 avec le silane fonctionnalisé amine primaire et secondaire.

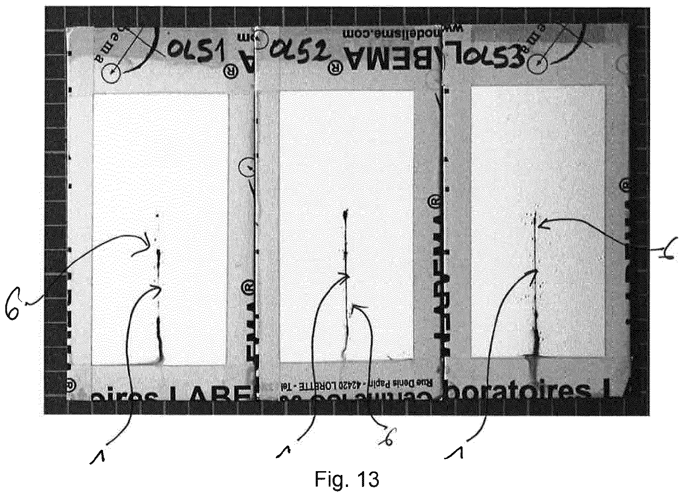

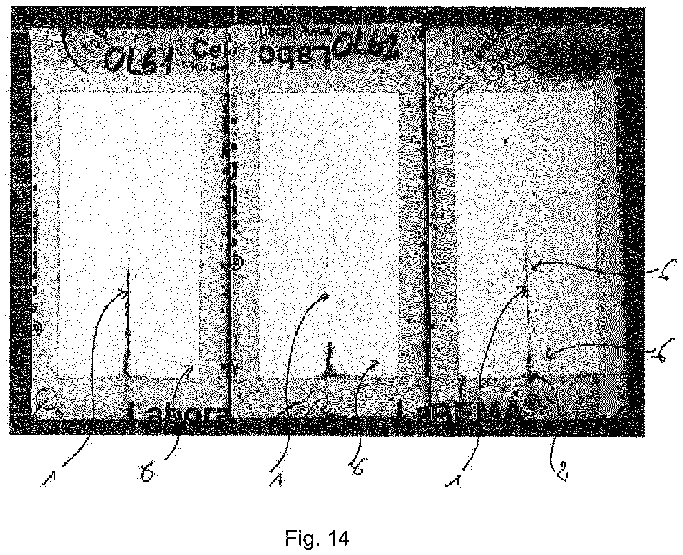

Les figures 13 et 14 sont relatives aux essais effectués avec une peinture DTM formulée à partir d'une dispersion colloïdale styrène-acrylique sec après 300 heures de brouillard salin.

La figure 13 présente les essais avec le silane fonctionnalisé amine primaire et la figure 14 avec le silane fonctionnalisé amine primaire et secondaire.

En conclusion le silane fonctionnalisé amine primaire et secondaire n'apporte pas d'efficacité supérieure en matière de résistance à la corrosion et d'amélioration de l'adhérence.

## Revendications

1. Composition sous forme de solution aqueuse, dont le pH est supérieur à 7, comprenant :
- de 5 à 30% du poids total d'une ou plusieurs alcanolamines ;
- de 5 à 30% du poids total d'un ou plusieurs acides carboxyliques ;
- de 5 à 30% du poids total d'une ou plusieurs alkyldiméthylamines ;
- de 5 à 50% du poids total d'un promoteur d'adhérence choisi parmi les silanes bifonctionnels ;
**caractérisée en ce que** le ratio entre les fonctions amines et les fonctions acides est strictement supérieur à 1 et inférieur à 2.

2. Composition selon la revendication 1 **caractérisée en ce qu'**elle comprend en outre un acide inorganique à une teneur comprise entre 1 et 5 % du poids total.

3. Composition selon l'une quelconque des revendications 1 à 2, **caractérisée en ce qu'**elle comprend en outre un solvant choisi dans le groupe des éthers de glycols.

4. Composition selon l'une quelconque des revendications précédentes **caractérisée en ce que** les alcanolamines sont choisies parmi la monoéthanolamine, la diéthanolamine, la triéthanolamine.

5. Composition selon l'une quelconque des revendications 1 à 4 **caractérisée en ce que** les acides carboxyliques sont choisis dans le groupe constitué par les acides dont la chaine aliphatique linéaire ou ramifiée comporte plus de 6 atomes de carbone.

6. Composition selon l'une quelconque des revendications 1 à 4 **caractérisée en ce que** les alkyldiméthylamines sont choisies parmi les alkyldiméthylamines dont la chaine alkyle comporte plus de 8 atomes de carbone.

7. Composition selon l'une quelconque des revendications précédentes, **caractérisée en ce que** les silanes fonctionnels sont choisis parmi les aminosilanes, les époxysilanes ou alkylpolysiloxanes.

## Patentansprüche

1. Zusammensetzung in Form einer wässrigen Lösug, deren pH größer als 7 ist, umfassend
- von 5 bis 30 % des Gesamtgewichts an einem oder mehreren Alkanolaminen;
- von 5 bis 30 % des Gesamtgewichts an einer oder mehreren Carbonsäuren;
- von 5 bis 30 % des Gesamtgewichts an einem oder mehreren Alkyldimethylaminen;
- von 5 bis 30 % des Gesamtgewichts an einem Haftvermittler, der ausgewählt ist aus bifunktionellen Silanen,
**dadurch gekennzeichnet, dass** das Verhältnis der Aminfunktionen zu den Säurefunktionen unbedingt größer als 1 und kleiner als 2 ist.

2. Zusammensetzung nach Anspruch 1, **dadurch gekennzeichnet, dass** sie zusätzlich eine anorganische Säure mit einem Gehalt zwischen 1 und 5 % des Gesamtgewichts umfasst.

3. Zusammensetzung nach einem der Ansprüche 1 bis 2, **dadurch gekennzeichnet, dass** sie zusätzlich ein Lösungsmittel umfasst, das ausgewählt ist aus der Gruppe der Glykolether.

4. Zusammensetzung nach einem der vorangehenden Ansprüche, **dadurch gekennzeichnet, dass** die Alkanolamine ausgewählt sind aus Monoethanolamin, Diethanolamin und Triethanolamin.

5. Zusammensetzung nach einem der Ansprüche 1 bis 4, **dadurch gekennzeichnet, dass** die Carbonsäuren ausgewählt sind aus der Gruppe bestehend aus Säuren, deren lineare oder verzweigte aliphatische Kette mehr als 6 Kohlenstoffatome umfasst.

6. Zusammensetzung nach einem der Ansprüche 1 bis 4, **dadurch gekennzeichnet, dass** die Alkylkette der Alkyldimethylamine mehr als 8 Kohlenstoffatome umfasst.

7. Zusammensetzung nach einem der vorangehenden Ansprüche, **dadurch gekennzeichnet, dass** die funktionellen Silane ausgewählt sind aus den Aminosilanen, den Epoxysilanen oder den Alkylpolysiloxanen.

## Claims

1. Composition in the form of an aqueous solution, whose pH is superior to 7, comprising:
- from 5 to 30 % of the total weight of one or more alkanolamines;
- from 5 to 30 % of the total weight of one or more carboxylic acids;
- from 5 to 30 % of the total weight of one or more alkyldimethylamines;
- from 5 to 50 % of the total weight of one adhesion promoter chosen among the bifunctional silanes;
**characterized in that** the ratio between the amines functions and the acids functions is strictly superior to 1 and inferior to 2.

2. Composition according to claim 1 **characterized in that** it further comprises an inorganic acid at a content between 1 and 5 % of the total weight.

3. Composition according to any of the claims 1 to 2, **characterized in that** it further comprises a solvent chosen among the group of the glycol ethers.

4. Composition according to any of the preceding claims **characterized in that** the alkanolamines are chosen among the monoethanolamine, the diethanolamine, the triethanolamine.

5. Composition according to any of the claims 1 to 4 **characterized in that** the carboxylic acids are chosen among the group consisting of the acids of which the linear or branched aliphatic chain includes more than 6 carbon atoms.

6. Composition according to any of the claims 1 to 4 **characterized in that** the alkyldimethylamines are chosen among the alkyldimethylamines whose alkyl chain includes more the 8 carbon atoms.

7. Composition according to any of the preceding claims, **characterized in that** the functional silanes are chosen among the aminosilanes, the epoxysilanes or alkylpolysiloxanes.
